# EUROPEAN PATENT APPLICATION

(11) **EP 4 748 524 A1**
(43) Date of publication of application: **27.05.2026**
(21) Application number: 24895527.0
(22) Date of filing: 05.06.2024
(51) Int. Cl.: B23D 15/02, H01M 10/04

(54) **TAB CUTTING MECHANISM AND BATTERY ASSEMBLY SYSTEM**

(30) Priority: 30.11.2023 CN 202311641572
(71) Applicant: Contemporary Amperex Technology Co., Limited, Ningde, Fujian 352100 (CN)
(72) Inventor: WU, Kai, Ningde, Fujian 352100 (CN); ZHANG, Yongli, Ningde, Fujian 352100 (CN); TANG, Wenxiang, Ningde, Fujian 352100 (CN); PAN, Wensheng, Ningde, Fujian 352100 (CN); HUANG, Qinkun, Ningde, Fujian 352100 (CN)
(74) Representative: Ziebig Hengelhaupt Intellectual Property Attorneys Patentanwaltskanzlei PartGmbB
(86) International application number: PCT/CN2024/097581
(87) International publication number: WO 2025/112421

(57) **Abstract**

A tab cutting mechanism and a battery assembling system. The tab cutting mechanism (10) includes a supporting structure (100), a cutting blade assembly (200), an electrode assembly positioning assembly (300), and a first driving assembly (400). The cutting blade assembly (200) includes a first component (210) and a second component (220). The first component (210) is mounted on the supporting structure (100). The electrode assembly positioning assembly (300) is mounted on the supporting structure (100) and is configured to support and position a main body part (22) of an electrode assembly (20). The first component (210) is configured to support a tab portion (21) of the electrode assembly (20). The first driving assembly (400) is mounted on the supporting structure (100), is connected to the second component (220), and is configured to drive the second component (220) to move, to cause the second component (220) to cooperate with the first component (210) to cut the tab portion (21). The tab cutting mechanism solves problems of low alignment degree, misalignment and inconsistent outer dimensions of the tab portion (21), so that the tab portion (21) is more regular, which facilitates subsequent adding of a case (10a) to the electrode assembly (20) to increase a yield rate of a battery (1).

## Description

The present application claims priority to Chinese Patent Application No. 2023116415723 filed on November 30, 2023 and entitled "TAB CUTTING MECHANISM AND BATTERY ASSEMBLING SYSTEM", the entire content of which is incorporated herein by reference.

### TECHNICAL FIELD

The present application relates to the technical field of batteries, and in particular to, a tab cutting mechanism and a battery assembling system.

### BACKGROUND

A battery is a part of a space in a cup, a tank, another container, or a composite container that contains an electrolyte solution and a metal electrode to generate current. It is a device that can convert chemical energy into electrical energy. With the development of science and technology, batteries are widely used in fields such as automobiles, home appliances, and aerospaces because of their advantages of portability, convenient charging and discharging operations, and long-time stable power supplying.

However, in an existing manufacturing process of a battery, after winding of an electrode assembly in the battery is completed and tabs are welded, there may be problems that a tab portion may have misalignment and outline dimension inconsistency. As a result, subsequent processes on the electrode assembly may be affected, and a low yield rate of the battery is caused.

### SUMMARY OF THE INVENTION

In view of the above problems, a tab cutting mechanism and a battery assembling system that are provided by the present application can solve the problems of low alignment degree, misalignment and inconsistent outer dimensions of the tab portion, so that the tab portion is more regular, which facilitates subsequent adding of a case around an electrode assembly to increase a yield rate of a battery.

In a first aspect, the present application provides a tab cutting mechanism. The tab cutting mechanism includes a supporting structure, a cutting blade assembly, an electrode assembly positioning assembly, and a first driving assembly. The cutting blade assembly includes a first component and a second component. The first component is mounted on the supporting structure. The electrode assembly positioning assembly is configured to support and position a main body part of an electrode assembly. The first component is configured to support a tab portion of the electrode assembly. The first driving assembly is mounted on the supporting structure, is connected to the second component, and is configured to drive the second component to move, to cause the second component to cooperate with the first component to cut the tab portion.

In this technical solution of this embodiment of the present application, the tab cutting mechanism is used to cut the tab portion of the electrode assembly, and the first driving assembly is arranged in the tab cutting mechanism to cause the second component to cooperate with the first component to cut the tab portion. In this design, it is convenient to cut the tab portion, making the tab portion more regular, which can solve the problems of low alignment degree, misalignment and inconsistent outer dimensions of the tab portion and facilitate subsequent adding of a case around an electrode assembly to increase a yield rate of a battery.

In some embodiments, the first component includes a first supporting surface and a first side surface. A first cutting edge is formed at a connection between the first supporting surface and the first side surface. The first supporting surface is configured to support the tab portion of the electrode assembly.

Through the above arrangement, the first supporting surface can support the tab portion of the electrode assembly, making the tab portion more stable during cutting. Meanwhile, when the first driving assembly is used to drive the second component to approach the first component, the second component can cooperate with the first cutting edge of the first component to facilitate cutting of the tab portion, thereby regulating a shape of the tab portion.

In some embodiments, the second component includes a second pushing surface and a second side surface. A second cutting edge is formed at a connection between the second pushing surface and the second side surface. The second pushing surface is configured to be in contact with and push a waste cut from the tab portion.

Through the above arrangement, the second cutting edge can cut the tab portion when the second pushing surface approaches the waste of the tab portion, thereby facilitating cutting of the tab portion.

In some embodiments, the second side surface includes a recess portion that is recessed away from the electrode assembly positioning assembly.

By arranging the recess portion on the second side surface, the second cutting edge formed by the second side surface and the second pushing surface can adapt to the shape of the tab portion. After the tab portion is cut by using the second cutting edge, the tab portion with the corresponding shape can be obtained.

In some embodiments, the first side surface includes a protrusion portion that protrudes away from the electrode assembly positioning assembly. The first side surface further includes two planar portions. The two planar portions are respectively located on two sides of the protrusion portion. The two planar portions are closer to the electrode assembly positioning assembly than the protrusion portion.

Since the two planar portions are closer to the electrode assembly positioning assembly than the protrusion portion, and connection portions of the protrusion portion, as well as the two planar portions, and the first supporting surface can form the first cutting edge, a root of the tab portion can be cut during cutting of the tab portion, which more effectively regulate the shape of the tab portion, to facilitate subsequent adding of the case around the electrode assembly.

In some embodiments, the first component further includes a first component main body. The first component main body includes a first main body part supporting surface and a first transition surface extending from the first main body part supporting surface to the first supporting surface. A portion of the first transition surface connected to the first supporting surface gradually moves away from the electrode assembly positioning assembly as the portion gradually moves away from the first main body part supporting surface.

By providing the first transition surface to gradually move away from the electrode assembly positioning assembly as it gradually moves away from the first main body part supporting surface, when the electrode assembly is placed on the first main body part supporting surface, the first transition surface can gather the root of the tab portion, thus causing the tab portion to be correctly placed on the first component before being cut to facilitate cutting of the tab portion.

In some embodiments, the cutting blade assembly further includes an elastic pressing member. The elastic pressing member is mounted on one side of the second component facing the first component to press the tab portion of the electrode assembly against the first component.

By the arrangement of the elastic pressing member for pressing the tab portion when the second component cuts the tab portion, the tab portion is not likely to move or deform when the second component cuts the tab portion, so that the tab portion is more regular.

In some embodiments, the supporting structure includes a first supporting frame, a second supporting frame, and a second driving assembly. The second driving assembly is connected between the first supporting frame and the second supporting frame, and is configured to drive the second supporting frame to move back and forth relative to the first supporting frame. Both the first component and the first driving assembly are mounted on the second supporting frame. The second component is mounted on the first supporting frame.

By respectively arranging the first component and the first driving assembly on the second supporting frame, and providing the second driving assembly and the first driving assembly to drive the second supporting frame to move back and forth relative to the first supporting frame, the second driving assembly can drive the second supporting frame and the first component to approach the tab portion, to be aligned with and support the tab portion, thereby facilitating cutting of the tab portion.

In some embodiments, the cutting blade assembly further includes a blowing structure. The blowing structure is arranged on one side of the second component facing the first component to blow off a waste cut from the tab portion.

By providing the blowing structure to blow off the waste cut from the tab portion, the waste obtained after the tab portion is cut can be prevented from being adhered to the tab portion, the first component, or the second component, to reduce the impact of the waste of the tab portion on cutting of the tab portion and a situation of affecting other subsequent processes.

In some embodiments, the tab cutting mechanism further includes a waste collection structure. The waste collection structure is mounted on the supporting structure and includes a collection cavity with an opening. The opening is located on one side of the first component that is away from the second component. The blowing structure is configured to blow the waste of the tab portion towards the opening.

By the arrangement of the waste collection structure, the waste of the tab portion blown off by the blowing structure can be collected, to reduce a situation that the waste of the tab portion scattered into the supporting structure, the cutting blade assembly, or another assembly mechanism affects operations of the assemblies, so that the process of cutting the tab portion is more normalized.

In some embodiments, the first driving assembly includes a cylinder; and/or two first components are provided, and the two first components are configured to respectively support two tab portions of the electrode assembly; the second component includes two second cutting edges, and the two second cutting edges are configured to respectively cooperate with the two first components to cut the two tab portions of the electrode assembly; and/or, the electrode assembly positioning assembly is further configured to convey the electrode assembly towards the cutting blade assembly.

By providing the two second cutting edges to cooperate with the two first components to cut the two tab portions of the electrode assembly, the two tab portions of the electrode assembly can be simultaneously cut. This can shorten the cutting time of the tab portions. In addition, the electrode assembly positioning assembly is configured to be able to drive the electrode assembly to move, which can facilitate conveying of the electrode assembly.

In a second aspect, the present application provides a battery assembling system, including the tab cutting mechanism in the above embodiment.

In some embodiments, the battery includes a case, a bottom cover, and an electrode assembly. The case has an open end. A terminal post is arranged on a wall of the case that is opposite to the open end. The terminal post has a through hole. The case and the bottom cover are connected to form an accommodating cavity communicated with the through hole. An active material coating portion of the electrode assembly is arranged inside the case. A tab portion of the electrode assembly is connected through the through hole to one side of the terminal post that faces away from the accommodating cavity.

The battery assembling system includes conveying equipment and assembling equipment. The conveying equipment is configured to convey a structure to be assembled to workstations of the assembling equipment. The workstations of the assembling equipment further include a tab welding device, a put-in device, a tab threading device, a terminal post welding device, and a bottom cover welding device.

The tab welding device is configured to weld a plurality of tab pieces of the electrode assembly to form the tab portion. The tab cutting mechanism is configured to cut the tab portion after the tab portion is formed by welding. The put-in device is configured to put the electrode assembly into the case from the open end. The tab threading device is configured to clamp the tab portion to be threaded through the through hole while the electrode assembly is put into the case. The terminal post welding device is configured to weld the tab portion that passes through the through hole to the side of the terminal post that faces away from the accommodating cavity. The bottom cover welding device is configured to weld the bottom cover to the open end of the case.

By arranging the conveying equipment into the battery assembling system, the structure to be assembled of the battery can be gradually conveyed to the workstations corresponding to the assembling equipment, to simplify an assembling procedure of the battery and facilitate overall assembling of the battery.

The foregoing descriptions are merely an overview of the technical solutions of the present application. In order to learn technical means of the present application more clearly so that the technical solutions can be implemented according to content of the description, and in order to make the foregoing and other objectives, features, and advantages of the present application understood more clearly, specific implementations of the present application are described below.

### DESCRIPTION OF DRAWINGS

By reading the detailed description of the preferred implementations below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the accompanying drawings:
FIG. 1 is a schematic structural diagram of an electrode assembly according to some embodiments of the present application;
FIG. 2 is a schematic partially structural diagram of a tab cutting mechanism according to some embodiments of the present application;
FIG. 3 is a schematic diagram of a proportionally enlarged structure of region O in the tab cutting mechanism embodiment shown in FIG. 2;
FIG. 4 is a schematic partially structural diagram of the tab cutting mechanism embodiment shown in FIG. 2;
FIG. 5 is a schematic structural diagram of a second component in the tab cutting mechanism embodiment shown in FIG. 4;
FIG. 6 is a schematic diagram of a proportionally enlarged structure of region P in the tab cutting mechanism embodiment shown in FIG. 4;
FIG. 7 is a schematic partially structural diagram of the tab cutting mechanism embodiment shown in FIG. 2, in another viewing angle;
FIG. 8 is a schematic diagram of a proportionally enlarged structure of region Q in the tab cutting mechanism embodiment shown in FIG. 7;
FIG. 9 is a schematic overall structural diagram of a tab cutting mechanism according to some embodiments of the present application;
FIG. 10 is another schematic overall structural diagram of a tab cutting mechanism according to some embodiments of the present application;
FIG. 11 is a schematic diagram of a proportionally enlarged structure of region R in the tab cutting mechanism embodiment shown in FIG. 10; and
FIG. 12 is a schematic overall structural diagram of a battery assembling system according to some embodiments of the present application.

Numerals in the specific implementations are as follows:
battery 1, case 10a, electrode assembly 20, accommodating cavity 11, through hole 14, tab portion 21, main body part 22, terminal post 15, top 13, open end 12, bottom cover 30;
tab cutting mechanism 10, supporting structure 100, cutting blade assembly 200, electrode assembly positioning assembly 300, first driving assembly 400, first component 210, second component 220, first supporting surface 211, first side surface 212, first cutting edge 213, second pushing surface 221, second side surface 222, second cutting edge 223, protrusion portion 2121, two planar portions 2122, recess portion 2221, first planar portion 2222, first component main body 214, first main body part supporting surface 2141, first transition surface 2142, first supporting frame 110, second supporting frame 120, second driving assembly 130, motor 131, speed reducer 132, lead screw 133, floating joint 134, linear sliding rail 101, elastic pressing member 230, pressing portion 231, elastic portion 232, blowing structure 240, blowing opening 241, waste collection structure 500, collection cavity 510, cylinder 410, conveyor belt 310, clamp 320, and third driving assembly 330.

### DESCRIPTION OF EMBODIMENTS

Embodiments of the technical solutions of the present application will be described in detail below with reference to the drawings. The following embodiments are only configured to more clearly illustrate the technical solutions of the present application, and therefore are only used as examples and cannot be used to limit the scope of protection of the present application.

Embodiments of the technical solutions of the present application will be described below in detail with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of' refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection", and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. Those of ordinary skill in the art can understand the specific meanings of the above terms in the embodiments of the present application according to specific situations.

With the development of battery technologies, batteries are applied to more and more fields, and gradually replace traditional fossil fuels in the field of automobile dynamics. The batteries can store chemical energy and controllably convert the chemical energy into electrical energy. In a recyclable battery, after discharging, an active material can be activated by charging and continues to be used.

Usually, in a manufacturing process of a battery, a tab portion of an electrode assembly needs to be first provided, and a layer of case is then added at a periphery of the electrode assembly. However, after winding of the electrode assembly in the battery is completed, the alignment degree of each layer of tab portion is poor, which may cause problems such as misalignment and inconsistent outer dimensions, thus affecting subsequent processes on the electrode assembly. For example, when the case is subsequently added to the electrode assembly, as it is not likely to be threaded out of a narrow gap of a shell, the tab portion that is misaligned or is inconsistent in appearance is compressed to be folded and cannot extend out of the shell. As a result, a yield rate of the battery is low.

In order to solve the problem of low alignment degree of each layer of tab portion after the winding of the electrode assembly is completed, the tab portion of the electrode assembly can be cut before the case is added, to regulate a shape of the tab portion, thus facilitating subsequent adding of the case to the electrode assembly or facilitating performing other processes.

On the basis of the above considerations, the present application provides a tab cutting mechanism and a battery assembling system. The tab cutting mechanism includes a supporting structure, a cutting blade assembly, an electrode assembly positioning assembly, and a first driving assembly. The cutting blade assembly includes a first component and a second component. The first component is mounted on the supporting structure. The electrode assembly positioning assembly is configured to support and position a main body part of an electrode assembly. The first component is configured to support a tab portion of the electrode assembly. The first driving assembly is mounted on the supporting structure, is connected to the second component, and is configured to drive the second component to move, to cause the second component to cooperate with the first component to cut the tab portion.

A structure of a battery will be exemplarily described below.

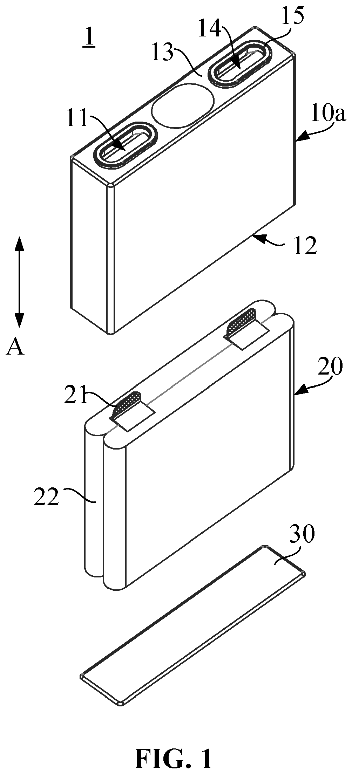

As shown in FIG. 1, the battery 1 may be an energy storage device. The energy storage device includes an energy storage container, an energy storage cabinet, or the like.

In some implementations, as shown in FIG. 1, the battery 1 may include a case 10a, a bottom cover 30, and an electrode assembly 20. The case 10a may have an open end 12. A terminal post 15 may be arranged on a wall of the case 10a that is opposite to the open end 12. The terminal post 15 may have a through hole 14. The case 10a and the bottom cover 30 may be connected to form an accommodating cavity 11 communicated with the through hole 14. An active material coating portion of the electrode assembly 20 is arranged inside the case 10a. A tab portion 21 of the electrode assembly 20 is connected through the through hole 14 to one side of the terminal post 15 that faces away from the accommodating cavity 11.

Optionally, the bottom cover 30 may be a component covering the open end 12 of the case 10a to isolate an internal environment of the battery 1 from an external environment. Without limitation, a shape of the bottom cover 30 can adapt to a shape of the open end 12 to match the case 10a. Optionally, the bottom cover 30 may be made of a material (such as the aluminum alloy) with hardness and strength, so that the bottom cover 30 does not easily deform when it is pressed and collided, so that the battery 1 can have higher structural strength, and the safety performance can also be improved.

A component such as the terminal post 15 may be arranged on the case 10a. The terminal post 15 may be configured to be electrically connected to the electrode assembly 20 to output or input electric energy of the battery 1. In some embodiments, a pressure relief mechanism for relieving an internal pressure when an internal pressure or temperature of the battery 1 reaches a threshold may be further arranged on the case 10a.

The case 10a is an assembly configured to cooperate with the bottom cover 30 to form an internal environment of the battery 1. The formed internal environment may be configured to accommodate the electrode assembly 20, electrolyte, and other components. The case 10 and the bottom cover 30 may be independent components. The open end 12 may be provided in the case 10a. The bottom cover 30 covers the open end 12 at the open end 12 to form the internal environment of the battery 1. In other implementations, a shape of the case 10a may be determined based on a specific shape and size of the electrode assembly 20. The case 10a may be made of various materials, such as but not limited to: copper, iron, aluminum, stainless steel, aluminum alloy, and plastic.

The electrode assembly 20 is a component that undergoes an electrochemical reaction in the battery 1. The case 10a may contain one or more electrode assemblies 20.

In some implementations, the electrode assembly 20 is provided with a tab portion 21 and a main body part 22. The tab portion 21 may export current from the main body part 22. The tab portion 21 includes a positive tab portion and a negative tab portion 21. The positive tab portion and the negative tab portion can be jointly located at one end of the main body part 22 or respectively located at two ends of the main body part 22. In charging and discharging processes of the battery 1, a positive electrode active material and a negative electrode active material react with the electrolyte, and the tab portion 21 is connected to the terminal post 15 to form a current loop.

In some embodiments, the main body part 22 incudes a positive electrode, a negative electrode, and a spacer. During charging and discharging of the electrode assembly 20, active ions (e.g., lithium ions) are intercalated and deintercalated back and forth between the positive electrode and the negative electrode. The spacer is arranged between the positive electrode and the negative electrode, and can function to prevent short circuit between the positive electrode and the negative electrode and allow the active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, a metal foil or a composite current collector may be used as the positive electrode current collector. For example, silver surface-treated aluminum or stainless steel, stainless steel, copper, aluminum, nickel, carbon electrode, carbon, nickel, titanium, or the like may be used as the metal foil. The composite current collector may comprise a polymer material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the positive electrode active material may include at least one of the following materials: a lithium-containing phosphate, a lithium transition metal oxide, and their respective modified compounds. However, the present application is not limited to these materials, and may also use another traditional material that may be used as a positive electrode active material for the battery 1. Only one or a combination of two or more of these positive electrode active materials may be used. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of the lithium transition metal oxide may include but are not limited to at least one of: a lithium-cobalt oxide (e.g. LiCoO₂), a lithium-nickel oxide (e.g. LiNiO₂), a lithium-manganese oxide (e.g. LiMnO₂ and LiMn2O₄), a lithium-nickel-cobalt oxide, a lithium-manganese-cobalt oxide, a lithium-nickel-manganese oxide, a lithium-nickel-cobalt-manganese oxide (e.g. LiNi_{1/3}Co_{1/3}Mn_{1/3}O₂, or referred to as NCM₃₃₃), LiNi_{0.5}Co_{0.2}Mn_{0.3}O₂ (or referred to as NCM₅₂₃), LiNi_{0.5}Co_{0.25}Mn_{0.25}O₂ (or referred to as NCM₂₁₁), LiNi_{0.6}Co_{0.2}Mn_{0.2}O₂ (or referred to as NCM₆₂₂), LiNi_{0.8}Co_{0.1}Mn_{0.1}O₂ (or referred to as NCM₈₁₁), a lithium-nickel-cobalt-aluminum oxide (e.g. LiNi_{0.85}Co_{0.15}Al_{0.05}O₂), and modified compounds thereof.

In some embodiments, the negative electrode may be a negative electrode plate, and the negative electrode plate may include a negative electrode current collector.

As an example, the negative electrode current collector may be a metal foil, a foam metal, or a composite current collector. For example, as the metal foil, aluminum or stainless steel treated with silver on the surface, copper, aluminum, nickel, a carbon electrode, carbon, titanium, etc. can be used. The foam metal may be foam nickel, foam copper, foam aluminum, foam alloy, or foam carbon, etc. The composite current collector may comprise a high molecular material substrate layer and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in its own thickness direction, and the negative electrode active material is arranged on either one or both of the two opposite surfaces of the negative electrode current collector.

For example, the negative electrode active material for the electrode assembly 20 that is commonly known in the art can be used as the negative electrode active material. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, a tinoxygen compound, and tin alloy. However, the present application is not limited to these materials, and may alternatively use another conventional material that may be used as a negative electrode active material for the battery 1. Only one or a combination of two or more of these negative electrode active materials may be used.

In some embodiments, the material of the positive electrode current collector may be aluminum, and the material of the negative electrode current collector may be copper.

In some implementations, the main body part 22 further includes a spacer that is arranged between the positive electrode and the negative electrode.

In some implementations, the spacer is a separator. A type of the separator is not particularly limited in the present application, and any well-known separator with a porous structure having good chemical stability and mechanical stability may be selected.

As an example, the main material of the separator film can be selected from at least one of glass fibers, non-woven fabric, polyethylene, polypropylene, polyvinylidene fluoride, and ceramic. The separator film can be either a single-layer thin film or a multi-layer composite thin film without special limitations. When the separator film is a multi-layer composite thin film, the material in each layer may be same or different, which is not particularly limited. The separator may be a single component located between the positive and negative electrodes, or may also be attached to the surfaces of the positive and negative electrodes.

In some embodiments, the spacer is a solid electrolyte. The solid electrolyte is arranged between the positive electrode and the negative electrode and plays a role of transmitting ions and isolates the positive electrode from the negative electrode.

In some implementations, the electrode assembly 20 further includes an electrolyte. The electrolyte plays a role of conducting ions between the positive electrode and the negative electrode. A type of the electrolyte is not specifically limited in the present application, and may be selected according to requirements. The electrolyte may be in a liquid state, a gel state, or a solid state.

The liquid electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solution may also be an ether solvent. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be a polyether (polyoxyethylene), polysiloxane, polycarbonate, polyacrylonitrile, polyvinylidene fluoride, polymethyl methacrylate, monoionic polymer, polyionic liquid-lithium salt, cellulose, or the like.

As an example, the inorganic solid electrolyte may be one or more of an oxide solid electrolyte (crystalline perovskite, sodium superionic conductor, garnet, amorphous LiPON film), a sulfide solid electrolyte (a crystalline lithium superionic conductor (lithium germanium phosphorus sulfide and argyrodite), amorphous sulfide), a halide solid electrolyte, a nitride solid electrolyte, and a hydride solid electrolyte.

For example, the composite solid electrolyte is formed by adding an inorganic solid electrolyte filler into a polymer solid electrolyte.

In some implementations, the main body part 22 is of a wound structure. The positive electrode plate and the negative electrode plate are wound into the wound structure.

On the basis of the structure of the battery 1 above, a battery assembling system for assembling the battery 1 will be exemplarily described.

The battery assembling system may include conveying equipment and assembling equipment. The conveying equipment may be configured to convey a structure to be assembled to workstations of the assembling equipment. The assembling equipment of the battery assembling system may include a tab cutting mechanism. Optionally, the workstations of the assembling equipment may further include a tab welding device, a put-in device, a tab threading device, a terminal post welding device, and a bottom cover welding device.

The tab welding device is configured to weld a plurality of tab pieces of the electrode assembly 20 to form the tab portion. The tab cutting mechanism is configured to cut the tab portion 21 after the tab portion 21 is formed by welding. The put-in device is configured to put the electrode assembly 20 into the case 10a from the open end 12. The tab threading device is configured to clamp the tab portion 21 to be threaded through the through hole 14 while the electrode assembly 20 is put into the case 10a. The terminal post welding device is configured to weld the tab portion 21 that passes through the through hole 14 to the side of the terminal post 15 that faces away from the accommodating cavity 11. The bottom cover 30 welding device is configured to weld the bottom cover 30 to the open end 12 of the case 10a.

It should be noted that in this embodiment, the conveying equipment includes a conveying line. The conveying line may be a conveying structure formed by matching a motor-driven conveying roller with a conveyor belt, a conveying structure formed by hinging a motor-driven conveying chain link hinge, or an automatic guided vehicle (AGV) conveying trolley, and may implement conveying in at least one direction and implement supporting to ensure the stability of the structure to be assembled.

By arranging the conveying equipment into the battery assembling system, the structure to be assembled of the battery 1 can be gradually conveyed to the workstations corresponding to the assembling equipment, to simplify an assembling procedure of the battery 1 and facilitate overall assembling of the battery 1.

The tab welding device aims to achieve the formation of the tab portion 21 after tab pieces are pre-welded and can employ ultrasonic welding equipment which can ensure that the tab portion 21 is welded in a stable clamped state. The put-in device is a pushing mechanism or a clamping mechanism, which can stably cause the electrode assembly 20 to move towards the open end 12 of the shell 10a and enter the accommodating cavity 11 through the open end 12. Similarly, the tab threading device may employ a clamping structure or a guiding structure, which can guide the tab portion 21 to be smoothly threaded through the through hole 14 without interfering with the case 10a. The terminal post welding device aims to implement welding between the tab portion 21 and the terminal post 15 and can employ laser welding equipment. The bottom cover welding device aims to implement peripheral edge welding between the bottom cover 30 and the open end 12 of the case 10a and is also laser welding equipment.

In addition, the assembling equipment is not limited to including the tab welding device, the put-in device, the tab threading device, the terminal post welding device, and the bottom cover welding device. For example, when a plurality of, for example, two, electrode assemblies 20 are provided, the assembling equipment further includes a pairing device. The pairing device is configured to stack the plurality of electrode assemblies 20, so that the tab pieces of the two electrode assemblies 20 are roughly opposite to each other, and the conveying structure may convey the paired electrode assemblies 20 to the tab welding device for welding of the tab pieces, to facilitate the formation of the tab portion 21. For another example, in order to ensure the reliability of a battery assembling process, a dust removal workstation, an NG detection workstation, or the like may be added between any two adjacent workstations. This embodiment does not impose a limitation.

In some implementations, the tab cutting mechanism may cut the tab portion 21 of the electrode assembly 20 to cause the tab portion 21 to have a corresponding shape and be threaded out of the through hole 14 when the electrode assembly 20 is put into the case, thereby assembling the electrode assembly 20 and the case 10a to form the battery 1.

The present application provides a tab cutting mechanism 10, which may be configured to cut a tab portion 21 of an electrode assembly 20.

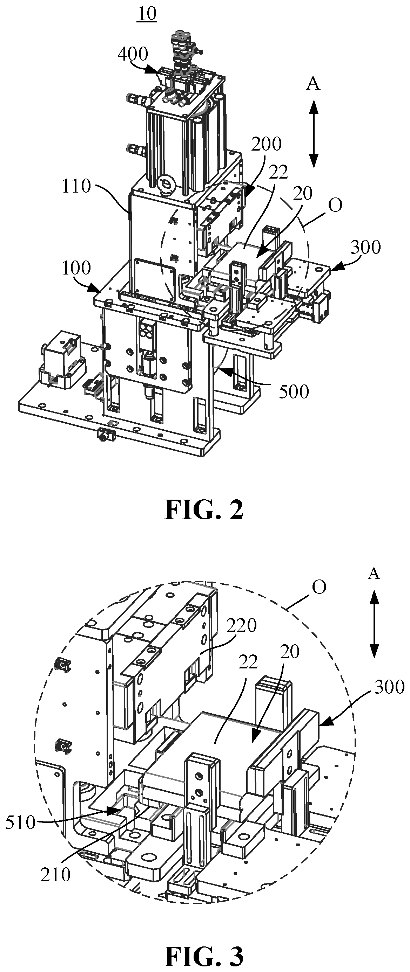

According to some embodiments of the present application, as shown in FIG. 2 to FIG. 4, the tab cutting mechanism 10 includes a supporting structure 100, a cutting blade assembly 200, an electrode assembly positioning assembly 300, and a first driving assembly 400.

The cutting blade assembly 200 may include a first component 210 and a second component 220. The first component 210 may be mounted on the supporting structure 100. The electrode assembly positioning assembly 300 may be configured to support and position a main body part 22 of the electrode assembly 20. The first component 210 may be configured to support the tab portion 21 of the electrode assembly 20. The first driving assembly 400 may be mounted on the supporting structure 100, is connected to the second component 220, and is configured to drive the second component 220 to move, to cause the second component 220 to cooperate with the first component 210 to cut the tab portion 21.

Optionally, at least one of the first component 210 and the second component 220 may be arranged as a cutting blade and have a cutting edge corresponding to the tab portion 21, and the cutting blade assembly 200 may use the cutting edge to cut the tab portion 21.

The second component 220 may move back and forth in a preset direction to approach or move away from the first component 210, and the preset direction may be indicated by a direction of arrow A in FIG. 2 to FIG. 4.

Optionally, shapes of the first component 210 and the second component 220 correspond to a desired shape of the tab portion 21, so that after the first component 210 and the second component 220 cooperate to cut the tab portion 21, the tab portion 21 with the corresponding shape can be obtained.

Optionally, the electrode assembly positioning assembly 300 may fix the electrode assembly 20 at a corresponding cutting position of the cutting blade assembly 200, so that in the cutting process of the tab portion 21, the tab portion 21 of the electrode assembly 20 can be placed on the first component 210. The first driving assembly 400 may then drive the second component 220 to approach the tab portion 21, so that the first component 210 and the second component 220 cooperate to cut the tab portion 21 into the desired shape.

By using the tab cutting mechanism 10 to cut the tab portion 21 of the electrode assembly 20 and arranging the first driving assembly 400 in the tab cutting mechanism 10 to cause the second component 220 to cooperate with the first component 210 to cut the tab portion 21, it is convenient to cut and regulate the tab portion 21, making the tab portion 21 more regular, which can solve the problems of low alignment degree, misalignment and inconsistent outer dimensions of the tab portion 21, and facilitate subsequent adding of the case 10a around the electrode assembly 20 to increase a yield rate of the battery 1.

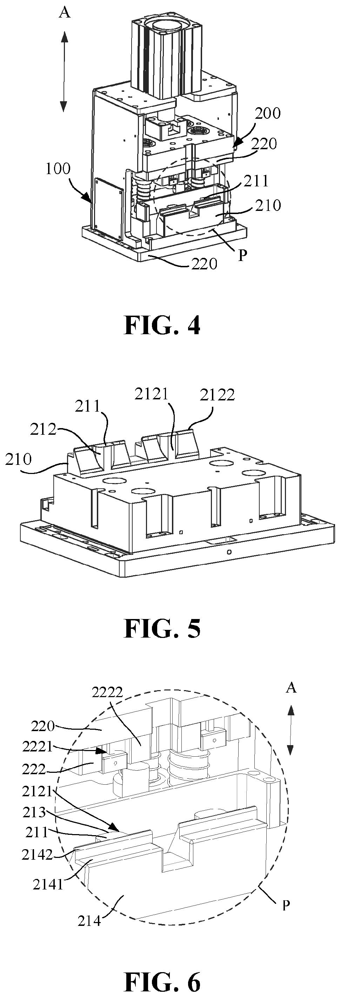

According to some embodiments of the present application, as shown in FIG. 4 to FIG. 6, the first component 210 may include a first supporting surface 211 and a first side surface 212. A first cutting edge 213 may be formed at a connection between the first supporting surface 211 and the first side surface 212. The first supporting surface 211 is configured to support the tab portion 21 of the electrode assembly 20.

Through the above arrangement, the first supporting surface 211 can support the tab portion 21 of the electrode assembly 20, making the tab portion 21 more stable during cutting. Meanwhile, when the first driving assembly 400 is used to drive the second component 220 to approach the first component 210, a portion of the tab portion 21 that exceeds the first supporting surface 211 can be pressed, which causes the first cutting edge 213 to cut the tab portion 21, thereby regulating a shape of the tab portion 21.

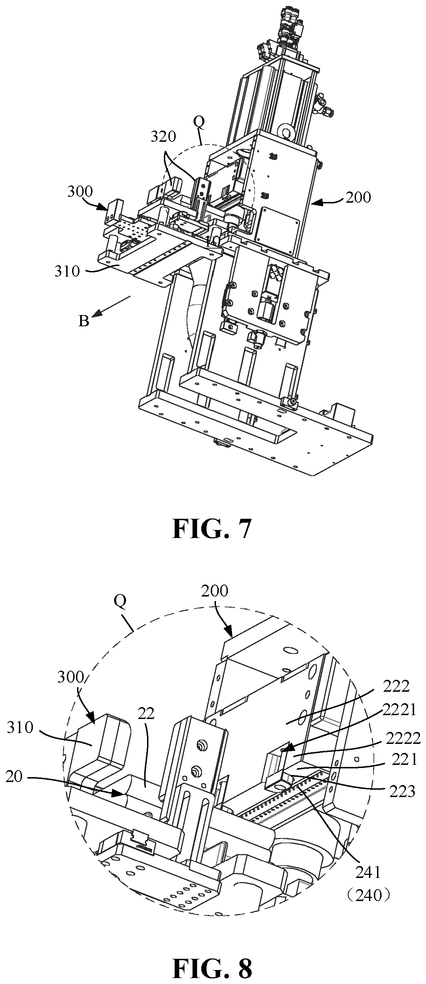

According to some embodiments of the present application, as shown in FIG. 7 to FIG. 8, the second component 220 may include a second pushing surface 221 and a second side surface 222. A second cutting edge 223 may be formed at a connection between the second pushing surface 221 and the second side surface 222. The second pushing surface 221 may be configured to be in contact with and push a waste cut from the tab portion 21.

By the arrangement of the second cutting edge 223, the second cutting edge 223 can cut the tab portion 21 when the second pushing surface 221 approaches the waste of the tab portion 21, thereby facilitating cutting of the tab portion 21.

According to some embodiments of the present application, the first cutting edge 213 or the second cutting edge 223 may be provided separately or simultaneously. If the first cutting edge 213 and the second cutting edge 223 are provided simultaneously, in the process that the first driving assembly 400 drives the second component 220 to approach the tab portion 21 and cut the tab portion 21, the first supporting surface 211 and the second pushing surface 221 are misaligned with each other, so that the first cutting edge 213 and the second cutting edge 223 are misaligned with each other and cooperate with each other to cut the tab portion 21. The first supporting surface 211 may support a portion of the tab portion 21 that needs to be retained, and the second pushing surface 221 is in contact with and pushes the waste cut from the tab portion 21.

According to some embodiments of the present application, as shown in FIG. 6 to FIG. 8, the second side surface 222 may include a recess portion 2221 that is recessed away from the electrode assembly positioning assembly 300. The recess portion 2221 can adapt to the shape of the tab portion 21, so that the second cutting edge 223 formed by the second side surface 222 and the second pushing surface 221 can adapt to the shape of the tab portion 21. The first component 210 and the recess portion 2221 may cooperate with each other, so that during the cutting of the tab portion 21, the first component 210 may be partially embedded in the recess portion 2221, and the first cutting edge 213 and the second cutting edge 223 can be misaligned and cooperate with each other to cut the tab portion 21.

Optionally, as shown in FIG. 6 to FIG. 8, the second side surface 222 of the second cutting edge 223 may have a corresponding first planar portion 2222. The recess portion 2221 is arranged in the middle of the first planar portion 2222, and the recess portion 2221 is farther away from the electrode assembly positioning assembly 300 than the first planar portion 2222. The second cutting edge 223 is jointly formed by connections between the first planar portion 2222, as well as the recess portion 2221, and the second pushing surface 221.

According to some embodiments of the present application, as shown in FIG. 5 to FIG. 6, the first side surface 212 may include a protrusion portion 2121 that protrudes away from the electrode assembly positioning assembly 300. The protrusion portion 2121 can also adapt to the desired shape of the tab portion 21 to support the tab portion 21.

Optionally, as shown in FIG. 5, the first side surface 212 may further include two planar portions 2122. The two planar portions 2122 may be respectively located on two sides of the protrusion portion 2121. The two planar portions 2122 are closer to the electrode assembly positioning assembly 300 than the protrusion portion 2121. The first cutting edge 213 is jointly formed by connections between the two planar portions 2122, as well as the protrusion portion 2121, and the first supporting surface 211.

Therefore, when the tab portion 21 to be cut is placed on the first supporting surface 211, the recess portion 2221 and the protrusion portion 2121 may correspond to a correct shape of the tab portion 21, and the two planar portions 2122 and the first planar portion 2122 may correspond to two sides of a root of the tab portion 21. Therefore, when the first cutting edge 213 and the second cutting edge 223 cut the tab portion 21, a portion of the first cutting edge 213 corresponding to the two planar portions 2122 and a portion of the second cutting edge 223 can cut the two sides of the root of the tab portion 21, so that the shape of the tab portion 21 can be more effectively regulated, to facilitate subsequent adding of the case around the electrode assembly 20.

According to some embodiments of the present application, as shown in FIG. 6, the first component 210 may further include a first component main body 214. The first component main body 214 may include a first main body part supporting surface 2141 and a first transition surface 2142 extending from the first main body part supporting surface 2141 towards the first supporting surface 211. A portion of the first transition surface 2142 that is connected to the first supporting surface 211 gradually moves away from the electrode assembly positioning assembly 300 as the portion gradually moves away from the first main body part supporting surface 2141. The first main body part supporting surface 2141 is configured to support and place a portion of the electrode assembly 20, and the first transition surface 2142 may be configured to gather the root of the tab portion 21.

Optionally, the first main body part supporting surface 2141 may be lower than the first supporting surface 211 in the preset direction, and a relative height between the first supporting surface 211 and the first main body part supporting surface 2141 may correspond to the arrangement of the tab portion 21 of the electrode assembly 20, so that when the first main body part supporting surface 2141 supports and places a portion of the electrode assembly 20, the tab portion 21 can be supported on the first supporting surface 211, thereby enabling the first supporting surface 211 and the first main body part supporting surface 2141 to play a role in positioning and fixing the electrode assembly 20.

The first transition surface 2142 may be correspondingly set based on the shape of the tab portion 21, so that the electrode assembly 20 is placed on a supporting surface of the main body part 22. When the tab portion 21 of the electrode assembly 20 is placed on the first main body part supporting surface 2141, the root of the tab portion 21 can lean against the first transition surface 2142.

By providing the first transition surface 2142 to gradually move away from the electrode assembly positioning assembly 300 as it gradually moves away from the first main body part supporting surface 2141, when the electrode assembly 20 is placed on the first main body part supporting surface 2141, the first transition surface 2142 can gather the root of the tab portion 21, thus causing the tab portion 21 to be correctly placed on the first component 210 before being cut to facilitate cutting of the tab portion 21, and making the tab portion 21 not likely to deform in the moving or cutting process.

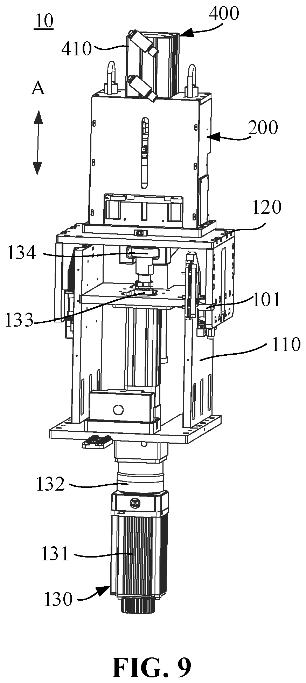

According to some embodiments of the present application, as shown in FIG. 9 to FIG. 10, the supporting structure 100 may include a first supporting frame 110, a second supporting frame 120, and a second driving assembly 130. The second driving assembly 130 may be connected between the first supporting frame 110 and the second supporting frame 120, and may be configured to drive the second supporting frame 120 to move back and forth relative to the first supporting frame 110. Both the first component 210 and the first driving assembly 400 may be mounted on the second supporting frame 120.

The second driving assembly 130 may be configured to drive the first component 210 to approach or move away from the electrode assembly 20 placed on the electrode assembly positioning assembly 300 by driving the second supporting frame 120. In this way, before the tab portion 21 is cut, the second driving assembly 130 may be used to drive the first component 210 to approach and be clung to the tab portion 21 of the electrode assembly 20. Or, after the cutting of the tab portion 21 is completed, the second driving assembly 130 may be used to drive the first component 210 to move away from the tab portion 21 of the electrode assembly 20, to reduce a situation that the tab portion 21 is damaged or deforms caused by scratching on the tab portion 21 during the subsequent movement of the electrode assembly 20.

Optionally, the first driving assembly 400 and the second component 220 may also be mounted on the second supporting frame 120, to facilitate the first driving assembly 400 to drive the second component 220 to move and cut the tab portion 21.

By respectively arranging the first component 210 and the second component 220 on the second supporting frame 120 and providing the second driving assembly 130 to drive the second supporting frame 120 to move back and forth relative to the first supporting frame 110, the second component 220 and the first component 210 can be aligned with the position of the tab portion 21, so as to facilitate cutting of the tab portion 21.

According to some embodiments of the present application, as shown in FIG. 9, the second driving assembly 130 may include a motor 131, a speed reducer 132, a lead screw 133, and a floating joint 134. Among them, the motor 131 is a power supplying device for providing electrical energy to other components of the second driving assembly 130. The speed reducer 132 is a deceleration transmission device for playing a role of speed matching and torque transmission between the motor 131 and the lead screw 133. The lead screw 133 may be a movement mechanism that can transmit linear movement and can enable the second driving assembly 130 to drive the second supporting frame 120 to drive the first component 210 to implement linear movement. The floating joint 134 is configured to connect the lead screw 133 with the second supporting frame 120, to allow the lead screw 133 to drive the second supporting frame 120 to move in a transmission manner.

Optionally, a linear sliding rail 101 may also be arranged between the second supporting frame 120 and the first supporting frame 110. The linear sliding rail 101 can guide the second supporting frame 120, to allow the second supporting frame 120 to move linearly in the preset direction under the driving of the second driving assembly 130.

By the above arrangement, the driving of the second driving assembly 130 can be faster, and the movement of the second supporting frame 120 can be more precise, thereby facilitating the first component 210 and the second component 220 to move to be aligned with the tab portion 21, and facilitating cutting of the tab portion 21.

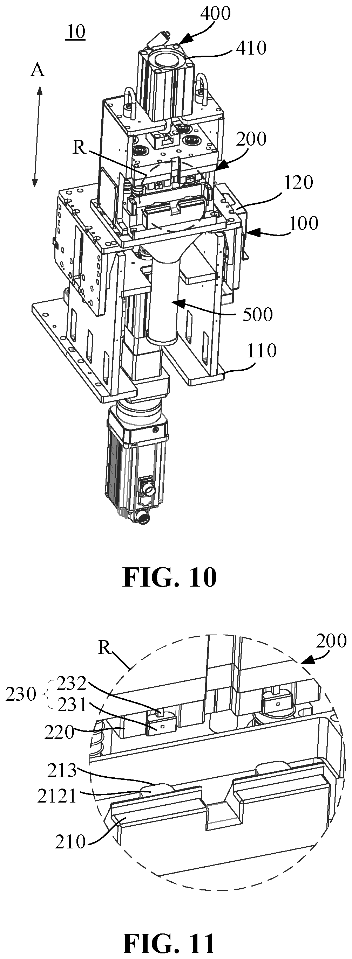

According to some embodiments of the present application, as shown in FIG. 11, the cutting blade assembly 200 further includes an elastic pressing member 230. The elastic pressing member 230 is mounted on one side of the second component 220 facing the first component 210 to press the tab portion 21 of the electrode assembly 20 against the first component 210. The elastic pressing member 230 may be correspondingly arranged at the protrusion portion 2121 of the first component 210, so that during the cutting of the tab portion 21, the elastic pressing member 230 can be in contact with the tab portion 21 and press the tab portion 21 against the first component 210.

Optionally, the elastic pressing member 230 may include a pressing portion 231 and an elastic portion 232. Specifically, the pressing portion 231 may be configured to be in contact with and press the tab portion 21, and a shape of the pressing portion 231 may adapt to the shape of the tab portion 21. The elastic portion 232 is configured to support the pressing portion 231 to move back and forth in the preset direction.

When the elastic pressing member 230 is not in contact with the tab portion 21, the elastic portion 232 is in an uncompressed state. When the pressing portion 231 is in contact with the tab portion 21, and in a process that the second component 220 continues to move along the first component 210, the elastic portion 232 is in a compressed state. In this process, the pressing portion 231 presses the tab portion 21, to facilitate cutting of the tab portion 21. After the cutting is completed, the first driving assembly 400 drives the second component 220 to move away from the first component 210 in the preset direction. In a process that the second component 220 rises, the elastic portion 232 gradually returns from the compressed state, thereby driving the pressing portion 231 to return to its original position, so that the pressing portion 231 can press the tab portion 21 before next cutting of the tab portion 21.

The elastic portion 232 may be an elastic element such as a spring or a leaf spring.

By the arrangement of the elastic pressing member 230 for pressing the tab portion 21 when the second component 220 cuts the tab portion 21, the tab portion 21 is not likely to move or deform when the second component 220 cuts the tab portion 21, so that the tab portion 21 is more regular.

According to some embodiments of the present application, as shown in FIG. 8, the cutting blade assembly 200 further includes a blowing structure 240. The blowing structure 240 is arranged on one side of the second component 220 facing the first component 210 to blow off a waste cut from the tab portion 21.

Optionally, as shown in FIG. 8, the blowing structure 240 may include a blowing opening 241. The blowing opening 241 faces the first component 210 to blowing air towards the first component 210 during the cutting of the tab portion 21, so as to blow off a waste of the tab portion 21 during the cutting of the tab portion 21. Optionally, the blowing opening 241 may be arranged on the second pushing surface 221 of the second component 220 and is farther away from the second side surface 222 than the elastic pressing member 230.

By providing the blowing structure 240 to blow off the waste cut from the tab portion 21, the waste obtained after the tab portion 21 is cut can be prevented from being adhered to the tab portion 21, the first component 210, or the second component 220, to reduce the impact of the waste of the tab portion 21 on cutting of the tab portion 21 and a situation of affecting other subsequent processes.

According to some embodiments of the present application, as shown in FIG. 1 and FIG. 10, the tab cutting mechanism 10 may further include a waste collection structure 500. The waste collection structure 500 may be mounted on the supporting structure 100 and may include a collection cavity 510 with an opening. The opening is located on one side of the first component 210 that is away from the second component 220. The blowing structure 240 is configured to blow the waste of the tab portion 21 towards the opening.

By the arrangement of the waste collection structure 500, the waste of the tab portion 21 blown off by the blowing structure 240 can be collected, to reduce a situation that the waste of the tab portion 21 scattered into the supporting structure 100, the cutting blade assembly 200, or another assembly mechanism affects operations of the assemblies, so that the process of cutting the tab portion 21 is more normalized.

According to some embodiments of the present application, as shown in FIG. 10, the waste collection structure 500 may be mounted on the first supporting frame 110. Its opening may correspond to the second pushing surface 221 in the preset direction, and the first side surface 212 may be located above the opening in the preset direction, so that when the second component 220 and the first component 210 cooperate to cut the tab portion 21, the second pushing surface 221 can push the waste of the tab portion 21 into the opening, and the blowing structure 240 can also blow the waste of the tab portion 21 into the opening.

According to some embodiments of the present application, as shown in FIG. 4 to FIG. 11, two first components 210 are provided, and the two first components 210 may be configured to respectively support two tab portions 21 of the electrode assembly 20. The second component 220 may also include two second cutting edges 223, and the two second cutting edges 223 are configured to respectively cooperate with the two first components 210 to cut the two tab portions 21 of the electrode assembly 20.

Optionally, there may be two recess portions 2221 of the second component 220 and two elastic pressing members 230. The two recess portions 2221 and the two elastic pressing members 230 are arranged in a manner of respectively corresponding to the protrusion portions 2121 of the two first components 210, so that the second component 220 cooperates with the two first components 210 to cut the tab portions 21.

Optionally, the waste collection structure 500 may also have two openings which respectively correspond to sides of the first components 210 that are away from the second component 220. Therefore, during the cutting of the two poles, the second pushing surface 221 of the second component 220 can push wastes of the tab portions 21 corresponding to the two tab portions 21 into the two openings.

By providing the two second cutting edges 223 to cooperate with the two first components 210 to cut the two tab portions 21 of the electrode assembly 20, the two tab portions 21 of the electrode assembly 20 can be simultaneously cut. This can shorten the cutting time of the tab portions 21.

According to some embodiments of the present application, as shown in FIG. 9 to FIG. 10, the first driving assembly 400 may include a cylinder 410. The cylinder 410 can drive the second member 220 to do reciprocating linear motion. Due to its simple structure, the cylinder 410 is adept at driving other elements to do reciprocating linear motion, making it particularly suitable for parallel conveying of a product and a workpiece. In addition, the cylinder 410 conveniently drive its air source and has good adaptability to a working environment. Therefore, using the cylinder 410 can standardize and systematize the cutting process of the tab portion 21 and can also reduce the costs of the tab cutting mechanism 10 and improve the reliability of the tab cutting mechanism 10.

According to some embodiments of the present application, the electrode assembly positioning assembly 300 may be further configured to convey the electrode assembly 20 towards the cutting blade assembly 200.

Optionally, as shown in FIG. 7, FIG. 8, and FIG. 12, the electrode assembly positioning assembly 300 may include a clamp 320. The conveying line of the conveying equipment may include a conveyor belt 310. The electrode assembly 20 may be placed on the conveyor belt 310, and the clamp 320 may clamp the electrode assembly 20 to fix the electrode assembly 20 to the conveyor belt 310.

As shown in FIG. 7, FIG. 8, and FIG. 12, a conveying direction of the conveyor belt 310 may be as shown in direction B in the figure. The conveyor belt 310 drives the clamp 320 to drive the electrode assembly 20 to move to a position corresponding to the tab cutting mechanism 10, so that the tab cutting mechanism 10 can cut the tab portion 21. After the cutting, the conveyor belt 310 may continue to drive the clamp 320 in the transmission direction to drive the electrode assembly 20 to move away from the position corresponding to the tab cutting mechanism 10, and convey the electrode assembly 20 to other equipment for other procedures.

Optionally, the conveying equipment may include a third driving assembly 330. The third driving assembly 330 may drive the conveyor belt 310 and the clamp 320 to implement conveying towards the cutting blade assembly 200, to convey the electrode assembly 20 to a cutting position corresponding to the cutting blade assembly 200 to cut the tab portion 21. The third driving assembly 330 may also drive the conveyor belt 310 and the clamp 320 to implement conveying away from the cutting blade assembly 200, to convey the electrode assembly 20 to other equipment for other procedures after the cutting of the tab 21 is completed. The third driving assembly 330 may be motor-driven or may be cylinder-driven or driven in other ways. This embodiment does not limit this.

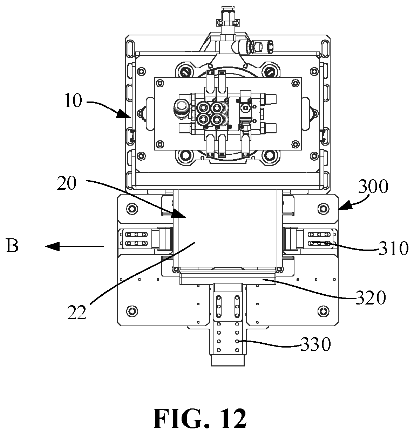

According to some embodiments of the present application, as shown in FIG. 12, the present application provides a battery assembling system, equipment including the tab cutting mechanism 10 in the above embodiment. Adding the tab cutting mechanism 10 into the battery assembling system can make a tab portion 21 of an electrode assembly 20 in a battery more regular, thereby facilitating adding of a case 10a to the electrode assembly 20 to assemble and form the battery, and increasing a yield rate of the battery.

According to some embodiments of the present application, as shown in FIG. 2 to FIG. 12, the tab cutting mechanism 10 includes a supporting structure 100, a cutting blade assembly 200, an electrode assembly positioning assembly 300, and a first driving assembly 400. The cutting blade assembly 200 may include a first component 210 and a second component 220. The first component 210 may be mounted on the supporting structure 100. The electrode assembly positioning assembly 300 may be configured to support and position a main body part 22 of the electrode assembly 20. The first component 210 may be configured to support the tab portion 21 of the electrode assembly 20. The first driving assembly 400 may be mounted on the supporting structure 100, is connected to the second component 220, and is configured to drive the second component 220 to move, to cause the second component 220 to cooperate with the first component 210 to cut the tab portion 21. The first component 210 may include a first supporting surface 211 and a first side surface 212. A first cutting edge 213 may be formed at a connection between the first supporting surface 211 and the first side surface 212. The first supporting surface 211 is configured to support the tab portion 21 of the electrode assembly 20. The second component 220 may include a second pushing surface 221 and a second side surface 222. A second cutting edge 223 may be formed at a connection between the second pushing surface 221 and the second side surface 222. The second pushing surface 221 may be configured to be in contact with and push a waste cut from the tab portion 21. The second side surface 222 may include a recess portion 2221 that is recessed away from the electrode assembly positioning assembly 300. The first side surface 212 may include a protrusion portion 2121 that protrudes away from the electrode assembly positioning assembly 300. The first side surface 212 may further include two planar portions 2122. The two planar portions 2122 may be respectively located on two sides of the protrusion portion 2121. The first component 210 may further include a first component main body 214. The first component main body 214 may include a first main body part supporting surface 2141 and a first transition surface 2142 extending from the first main body part supporting surface 2141 towards the first supporting surface 211. A portion of the first transition surface 2142 that is connected to the first supporting surface 211 gradually moves away from the electrode assembly positioning assembly 300 as the portion gradually moves away from the first main body part supporting surface 2141. The supporting structure 100 may include a first supporting frame 110, a second supporting frame 120, and a second driving assembly 130. The second driving assembly 130 may be connected between the first supporting frame 110 and the second supporting frame 120, and may be configured to drive the second supporting frame 120 to move back and forth relative to the first supporting frame 110. Both the first component 210 and the first driving assembly 400 may be mounted on the second supporting frame 120. The cutting blade assembly 200 further includes an elastic pressing member 230. The elastic pressing member 230 is mounted on one side of the second component 220 facing the first component 210 to press the tab portion 21 of the electrode assembly 20 against the first component 210. The cutting blade assembly 200 further includes a blowing structure 240. The blowing structure 240 is arranged on one side of the second component 220 facing the first component 210 to blow off a waste cut from the tab portion 21. The tab cutting mechanism 10 may further include a waste collection structure 500. The waste collection structure 500 may be mounted on the supporting structure 100 and may include a collection cavity 510 with an opening. The opening is located on one side of the first component 210 that is away from the second component 220. The blowing structure 240 is configured to blow the waste of the tab portion 21 towards the opening. Two first components 210 may be provided, and the two first components 210 may be configured to respectively support two tab portions 21 of the electrode assembly 20. The second component 220 may also include two second cutting edges 223, and the two second cutting edges 223 are configured to respectively cooperate with the two first components 210 to cut the two tab portions 21 of the electrode assembly 20. The first driving assembly 400 may include a cylinder 410. The electrode assembly positioning assembly 300 may be further configured to convey the electrode assembly 20 towards the cutting blade assembly 200.

In some implementations, a battery 1 may include a case 10a, a bottom cover 30, and an electrode assembly 20. The case 10a has an open end 12. A terminal post 15 is arranged on a wall of the case 10a that is opposite to the open end 12. The terminal post 15 has a through hole 14. The case 10a and the bottom cover 30 are connected to form an accommodating cavity 11 communicated with the through hole 14. An active material coating portion of the electrode assembly 20 is arranged inside the case 10a. A tab 21 of the electrode assembly is connected through the through hole 14 to one side of the terminal post 15 that faces away from the accommodating cavity 11.

The battery assembling system may include conveying equipment and assembling equipment. The conveying equipment may be configured to convey a structure to be assembled to workstations of the assembling equipment. The workstations of the assembling equipment are as mentioned above in the tab cutting mechanism 10. The workstations of the assembling equipment may further include may further include a tab welding device, a put-in device, a tab threading device, a terminal post welding device, and a bottom cover welding device.

Specifically, the tab welding device may be configured to weld a plurality of tab pieces of the electrode assembly to form the tab portion 21. The tab cutting mechanism 10 may be configured to cut the tab portion 21 after the tab portion 21 is formed by welding. The put-in device may be configured to put the electrode assembly 20 into the case 10a from the open end 12. The tab threading device may be configured to clamp the tab portion 21 to be threaded through the through hole 14 while the electrode assembly 20 is put into the case 10a. The terminal post welding device is configured to weld the tab portion 21 that passes through the through hole 14 to the side of the terminal post 15 that faces away from the accommodating cavity 11. The bottom cover 30 welding device is configured to weld the bottom cover 30 to the open end 12 of the case 10a.

In conclusion, the embodiments of the present application can solve problems of low alignment degree, misalignment and inconsistent shapes of the tab portion 21, so that the tab portion 21 is more regular, which facilitates subsequent adding of the case 10a around the electrode assembly 20 and can increase a yield rate of the battery.

The above describes only the embodiments of the present application and does not limit the patent scope of the present application. Any equivalent structure or equivalent process transformation made using the specification and contents of accompanying drawings of the present application, or directly or indirectly applied in other related technical fields, are equally included in the scope of patent protection of the present application.

## Claims

1. A tab cutting mechanism, comprising:
a supporting structure;
a cutting blade assembly, comprising a first component and a second component, wherein the first component is mounted on the supporting structure;
an electrode assembly positioning assembly, configured to support and position a main body part of an electrode assembly, wherein the first component is configured to support a tab portion of the electrode assembly; and
a first driving assembly, mounted on the supporting structure, connected to the second component, and configured to drive the second component to move, to cause the second component to cooperate with the first component to cut the tab portion.

2. The tab cutting mechanism according to claim 1, wherein
the first component comprises a first supporting surface and a first side surface; a first cutting edge is formed at a connection between the first supporting surface and the first side surface; and the first supporting surface is configured to support the tab portion of the electrode assembly.

3. The tab cutting mechanism according to claim 1, wherein
the second component comprises a second pushing surface and a second side surface; a second cutting edge is formed at a connection between the second pushing surface and the second side surface; and the second pushing surface is configured to be in contact with and push a waste cut from the tab portion.

4. The tab cutting mechanism according to claim 3, wherein
the second side surface comprises a recess portion that is recessed away from the electrode assembly positioning assembly.

5. The tab cutting mechanism according to claim 2, wherein
the first side surface comprises a protrusion portion that protrudes away from the electrode assembly positioning assembly;
the first side surface further comprises two planar portions; and the two planar portions are respectively located on two sides of the protrusion portion.

6. The tab cutting mechanism according to claim 2, wherein
the first component further comprises a first component main body; the first component main body comprises a first main body part supporting surface and a first transition surface extending from the first main body part supporting surface to the first supporting surface; and a portion of the first transition surface connected to the first supporting surface gradually moves away from the electrode assembly positioning assembly as the portion gradually moves away from the first main body part supporting surface.

7. The tab cutting mechanism according to claim 1, wherein
the cutting blade assembly further comprises an elastic pressing member; the elastic pressing member is mounted on one side of the second component facing the first component to press the tab portion of the electrode assembly against the first component.

8. The tab cutting mechanism according to claim 1, wherein
the supporting structure comprises a first supporting frame, a second supporting frame, and a second driving assembly;
the second driving assembly is connected between the first supporting frame and the second supporting frame, and is configured to drive the second supporting frame to move back and forth relative to the first supporting frame; and
both the first component and the first driving assembly are mounted on the second supporting frame.

9. The tab cutting mechanism according to claim 8, wherein
the cutting blade assembly further comprises a blowing structure; the blowing structure is arranged on one side of the second component facing the first component to blow off a waste cut from the tab portion.

10. The tab cutting mechanism according to claim 9, wherein
the tab cutting mechanism further comprises a waste collection structure; the waste collection structure is mounted on the supporting structure and comprises a collection cavity with an opening; the opening is located on one side of the first component that is away from the second component; and
the blowing structure is configured to blow the waste of the tab portion towards the opening.

11. The tab cutting mechanism according to any one of claims 1 to 8, wherein
the first driving assembly comprises a cylinder; and/or
two first components are provided; the two first components are configured to respectively support two tab portions of the electrode assembly; the second component comprises two second cutting edges; the two second cutting edges are configured to respectively cooperate with the two first components to cut the two tab portions of the electrode assembly; and/or
the electrode assembly positioning assembly is further configured to convey the electrode assembly towards the cutting blade assembly.

12. A battery assembling system, comprising the tab cutting mechanism according to any one of claims 1 to 11.

13. The battery assembling system according to claim 12, wherein the battery comprises a case, a bottom cover, and an electrode assembly; the case has an open end; a terminal post is arranged on a wall of the case that is opposite to the open end; the terminal post has a through hole; the case and the bottom cover are connected to form an accommodating cavity communicated with the through hole; an active material coating portion of the electrode assembly is arranged inside the case; a tab portion of the electrode assembly is connected through the through hole to one side of the terminal post that faces away from the accommodating cavity;
the battery assembling system comprises conveying equipment and assembling equipment; the conveying equipment is configured to convey a structure to be assembled to workstations of the assembling equipment; the workstations of the assembling equipment further include a tab welding device, a put-in device, a tab threading device, a terminal post welding device, and a bottom cover welding device;
the tab welding device is configured to weld a plurality of tab pieces of the electrode assembly to form the tab portion; the tab cutting mechanism is configured to cut the tab portion after the tab portion is formed by welding; the put-in device is configured to put the electrode assembly into the case from the open end; the tab threading device is configured to clamp the tab portion to be threaded through the through hole while the electrode assembly is put into the case; the terminal post welding device is configured to weld the tab portion that passes through the through hole to the side of the terminal post that faces away from the accommodating cavity; and the bottom cover welding device is configured to weld the bottom cover to the open end of the case.
